Europäisches Patentamt

European Patent Office

Office européen des brevets

(19)

(11) Veröffentlichungsnummer : **0 176 110**
**B1**

(12) EUROPÄISCHE PATENTSCHRIFT

(45) Veröffentlichungstag der Patentschrift :
05.04.89

(21) Anmeldenummer : 85112380.2

(22) Anmeldetag : 30.09.85

(51) Int. Cl.⁴ : **C 10 L 9/10**

(54) **Verfahren zur thermischen Behandlung von Abfallstoffen unter Zugabe basisch wirkender Stoffe.**

(30) Priorität : 28.09.84 DE 3435622

(43) Veröffentlichungstag der Anmeldung :
02.04.86 Patentblatt 86/14

(45) Bekanntmachung des Hinweises auf die Patenterteilung : 05.04.89 Patentblatt 89/14

(84) Benannte Vertragsstaaten :
CH FR GB LI NL

(56) Entgegenhaltungen :
EP--A-- 0 124 827
US--A-- 4 302 207

(73) Patentinhaber : Deutsche Kommunal-Anlagen Miete
GmbH
c/o Deutsche Anlagen-Leasing GmbH Wilhelm-Theo-
dor-Römheld-Strasse 30
D-6500 Mainz (DE)

(72) Erfinder : Hillekamp, Klaus, Dr.
Musäusstrasse 3
D-8000 München 60 (DE)
Erfinder : Haack, Jörg
Habacherstrasse 58
D-8000 München 70 (DE)

(74) Vertreter : Tetzner, Volkmar, Dr.-Ing. Dr. jur.
Van-Gogh-Strasse 3
D-8000 München 71 (DE)

## Beschreibung

Die Erfindung betrifft ein Verfahren entsprechend dem Oberbegriff des Anspruches 1.

Es ist bereits bekannt, Abfälle durch Entgasung oder Vergasung zu behandeln. Hierbei entstehen Brenngase und ein kohlenstoffhaltiger Rückstand, der auch die anorganischen Bestandteile der Abfallstoffe enthält. Die Brenngase enthalten neben den brennbaren Stoffen Methan, Kohlenmonoxid, Wasserstoff und Kohlenwasserstoffe noch Kohlendioxid und Wasserdampf, weiterhin saure Schadstoffe in Form von Chlorwasserstoff, Fluorwasserstoff, Schwefelwasserstoff, Schwefeldioxid und gelegentlich in geringen Mengen Cyanwasserstoff. Es handelt sich bei diesen Verbindungen um Substanzen, die die nachfolgenden Reinigungs- und Verwertungsmaßnahmen stören. Außerdem dürfen nur bestimmte Mindestmengen aus einer Anlage emittiert werden.

Durch die DE-A-30 142 382 ist es bereits bekannt, durch Zugabe von feinpulvrigen basischen Stoffen, wie Calciumhydroxid oder Calciumcarbonat, die sauren Schadstoffe in den entstehenden Rückstand einzubinden. Eine weitgehende Reinigung des Prozeßgases von diesen sauren Schadstoffen und die Einbindung der entstehenden Neutralsalze in den Rückstand ist möglich. Allerdings ist hierzu eine verhältnismäßig große Menge an Calciumhydroxid erforderlich. Werden beim Hausmüll zur Neutralisation und Einbindung von 4 kg Chlorwasserstoff/t Müll rein stöchiometrisch rund 4 kg Calciumhydroxid benötigt, so ist der tatsächliche Bedarf deutlich höher. Er beträgt 20 kg/t Hausmüll. Trotz dieses hohen Überschusses an Calciumhydroxid ist die Sicherheit der Einhaltung des Grenzwertes für Chlorwasserstoff bei der Verbrennung des Pyrolysegases nicht immer gegeben. Außerdem führt die stark überstöchiometrische Zugabe von Calciumhydroxid einmal zu einer mengenmäßigen Belastung des Rückstandes, und zum anderen dazu, daß der Rückstand stark alkalisch wirkt. Außerdem wird ein Teil des nicht umgesetzten, feinpulvrigen Calciumhydroxids aus dem Reaktor ausgeblasen und trägt bis zu 50 % der Staubemission bei.

Durch die US-A-4,302,207 ist weiterhin ein Verfahren zur Verbrennung von Kohle bekannt, bei dem die Kohle und eine calciumhaltige Verbindung vor der Verbrennung in Form einer wässrigen Aufschlämmung vermischt werden, die ein Geliermittel enthält.

Schließlich ist durch die EP-A-0 124 827 ein Verfahren zum Verbrennen von Müll bekannt, bei dem dem Müll als Zuschlagsstoff ein Spezialkalk sowie Rückstandsprodukte aus der Zuckerindustrie zugegeben werden.

Der Erfindung liegt die Aufgabe zugrunde, ein Verfahren entsprechend dem Oberbegriff des Anspruches 1 so auszubilden, daß der Gehalt der Prozeßgase an sauren Schadstoffen verringert, der Verbrauch an pulverförmigen, basisch wirkenden Stoffen gesenkt und die Staubemission vermindert wird.

Diese Aufgabe wird erfindungsgemäß durch die kennzeichnenden Merkmale des Anspruches 1 gelöst.

Zweckmäßige Ausgestaltungen der Erfindung sind Gegenstand der Unteransprüche.

In der Technik werden als basisch wirkende Stoffe vorwiegend die preisgünstigen Calciumverbindungen wie Kalkhydrat, Branntkalk und etwas seltener, Calciumcarbonat, in feinpulvriger Form eingesetzt. Sie finden als sehr feinteilige, oberflächenreiche Substanzen Verwendung, da eine große Oberfläche die Reaktion der gasförmigen Schadstoffe mit den Festkörpern begünstigt.

Bei den technischen Ausführungsverfahren werden die feinpulvrigen basischen Calciumverbindungen im Eingangsteil des Reaktors den Abfallstoffen aufgegeben. Die Durchmischung mit den Abfallstoffen erfolgt dann im außenbeheizten, rotierenden Drehrohr oder im feststehenden, außenbeheizten Drehrohr infolge der Innendurchmischung, z. B. mit Hilfe einer Welle, die mit Paddeln versehen ist.

Es hat sich nun herausgestellt, daß feinpulvrige basische Calciumverbindungen schlecht auf Papier, Kunststoffen und Gummi haften, die die eigentlichen Träger von Chlor, Fluor und Schwefel sind. Eine verstärkte Haftung erfolgt dagegen an den Feuchtigkeitsträgern, nämlich den Vegetabilien, das sind Küchen- und Gartenabfälle. Nach dem Trocknen ist die Haftfähigkeit von Papier und Kunststoffen noch weniger ausgeprägt. Wieviel freies, nichthaftendes basisches Material nach dem Trocknen noch vorhanden ist, das sich dann weiterhin über die Schadstoffträger verteilen kann, konnte bisher nicht geklärt werden. Der hohe Überschußbedarf an feinpulvrigen Calciumverbindungen deutet jedoch auf eine schlechte Verteilung hin. Dagegen bleiben die angefeuchteten, feinpulvrigen Calciumverbindungen auch nach dem Trocknen an den Abfallstoffen hängen.

Durch Zusatz von Substanzen, welche die Haftung der feinpulvrigen basischen Verbindungen an den Abfallstoffen, insbesondere Papier, Kunststoffen und Gummi, ermöglichen, läßt sich eine gleichmäßige Verteilung über alle Komponenten des Abfalls erzielen.

Bei der Freisetzung der sauren Bestandteile, die bei der thermischen Behandlung etwa bei 260 °C beginnt, weist der Abfall dann eine gleichmäßige Beaufschlagung mit den feinpulvrigen basischen Verbindungen auf, wenn Haftmittel zugesetzt werden. Da der gesamte Abfall mit basischen Substanzen versehen ist, werden die freigesetzten Schadstoffe entweder sofort oder bei ihrer Wanderung durch den Abfall von den basischen Verbindungen zur Reaktion gebracht und neutralisiert. Die Neutralsalze verbleiben dann im Rückstand.

Eine vorteilhafte Ausführungsform des erfindungsgemäßen Verfahrens besteht darin, den basischen Substanzen Haftsubstanzen zuzusetzen, die bei höherer Temperatur wirksam werden.

Es ist problematisch, den basisch wirkenden Substanzen Haftsubstanzen zuzusetzen, die bereits bei Normaltemperatur ihre Wirksamkeit, d. h. Klebefähigkeit, entfalten. Dies würde das Zusammenbacken des feinpulvrigen basischen Materials bedingen. Eine Verteilung über das Abfallgemisch wäre dann nicht mehr möglich. Deshalb wird erfindungsgemäß vorgeschlagen den basisch wirkenden Stoffen Haftsubstanzen zuzusetzen, die erst bei höherer Temperatur ihre Wirksamkeit entfalten.

In einer weiteren Ausgestaltung des erfindungsgemäßen Verfahrens geschieht der Zusatz der Haftsubstanzen derart, daß Haftsubstanzen zugesetzt werden, die ab 50 °C, vorzugsweise ab 100 °C, wirksam werden.

Werden die Haftsubstanzen erst ab 50 °C wirksam, so ist es möglich, außerhalb des Reaktors Haftsubstanzen, die Haftvermittler sind, und die feinpulvrigen basisch wirkenden Calciumverbindungen zu vermischen und sie dem Abfall beizubringen. Da beim Anlagenbetrieb häufig Temperaturen von 30-40 °C in den Silos und im Zuleitungssystem auftreten, ist es erwünscht, daß die Haftsubstanzen erst ab 50 °C ihre Wirksamkeit entfalten.

Eine andere bevorzugte Ausführungsform des erfindungsgemäßen Verfahrens ist dadurch gekennzeichnet, daß als Haftsubstanzen Stoffe und Stoffgemische zugesetzt werden, die oberhalb 50 °C jedoch unterhalb der Zersetzungstemperatur der organischen Abfälle erweichen und/oder zu schmelzen beginnen und damit ihre Haftwirksamkeit entfalten.

Erfindungsgemäß handelt es sich bei diesen Haftsubstanzen um bei höherer Temperatur erweichende und/oder schmelzende Kunststoffe. Eine bekannte Gruppe derartiger Kunststoffe sind die Schmelzkleber, d. h. Substanzen, die bei höherer Temperatur zu schmelzen beginnen und als Klebstoffe wirken.

Besonders geeignet für die Durchführung des erfindungsgemäßen Verfahrens sind oberhalb 50 °C erweichende und/oder schmelzende Ethylenvinylacetat-Kopolymere und/oder Polyamide. Geeignet sind auch Terpolymere aus Vinylacetat, Vinyllaurat und Vinylversat.

Bei den Polyamiden kommen die Substanzen in Frage, die z. B. als Kopolyamide eine relativ niedere Schmelztemperatur aufweisen.

In einer besonderen Ausführungsform des erfindungsgemäßen Verfahrens werden die Haftstoffe in feinpulvriger Form mit den pulverförmigen basisch wirkenden Stoffen vermischt.

Auf diese Weise lassen sich bei Einsatz von pulverförmigen Haftstoffen und den pulverförmigen basischen Stoffen, die Mischvorgänge leicht bewältigen. Das Gemisch kann dann mit den üblichen Vorrichtungen für die Dosierung der Calciumverbindungen zum Abfall gegeben werden.

Von Vorteil ist es hierbei, wenn die Haftstoffe als Pulver mit der gleichen Korngröße den basisch wirkenden Stoffen zugesetzt werden.

Im Falle von basisch wirksamen Stoffen ist es angebracht, die Haftstoffe mit einer Korngröße kleiner 10 μm zuzusetzen.

In dieser feinen Verteilung ist die Haftwirksamkeit der Haftstoffe bezüglich der Abfallstoffe und des Calciumhydroxids besonders ausgeprägt. Eine Entmischung tritt aufgrund der Korngleichheit, der auch weitestgehend das spezifische Gewicht entspricht, nicht ein. Das hat den Vorteil, daß auch bei freiem Fall des Abfalls samt basisch wirkender Substanzen plus Haftsubstanzen keine Entmischung auftritt.

Erfindungsgemäß werden die Haftstoffe den basisch wirkenden Stoffen zweckmäßig in Mengen von 0,5-25 Gew.% vorzugsweise 1-15 Gew.%, zugesetzt.

Diese Menge ist ausreichend, um eine gute Haftung der pulverförmigen, basisch wirkenden Stoffe an den Abfallstoffen Papier, Kunststoff und Gummi zu gewährleisten.

Entsprechend einer weiteren Ausgestaltung der Erfindung werden die Haftsubstanzen den Abfallstoffen vor und/oder während der thermischen Behandlung als Pulver oder Granulat zugesetzt.

Bevorzugt wird jedoch die Zugabe der Haftsubstanzen zusammen mit den pulverförmigen, basisch wirkenden Stoffen zum Abfall vor der thermischen Behandlung in den Eingabeteil des Reaktors. Hierdurch kann noch gewährleistet werden, daß die auf organischer Basis beruhenden Haftsubstanzen ihre Wirksamkeit entfalten, bevor sie dann selbst im Reaktor zersetzt werden.

Eine weitere, bevorzugte Ausführungsform des erfindungsgemäßen Verfahrens besteht darin, daß die Abfälle vor der thermischen Behandlung soweit befeuchtet werden, daß die pulverförmigen, basisch wirkenden Stoffe auf den Abfällen haften bleiben.

Die Abfälle können aber auch mit den pulverförmigen, basisch wirkenden Stoffen vermischt und dann angefeuchtet werden.

Eine weitere Ausführungsform besteht darin, Wasser und die pulverförmigen, basisch wirkenden Stoffe gleichzeitig zu den Abfällen zu geben.

Wie bereits eingangs ausgeführt, besteht bei der thermischen Behandlung von Abfallstoffen in Gegenwart von pulverförmigen, basisch wirkenden Substanzen ein Problem dahingehend, daß die besonders feuchten Komponenten des Abfallgemisches, nämlich die Vegetabilien, bevorzugt aufgrund ihrer Feuchtigkeit mit den basischen Stoffen überzogen werden. Die weniger feuchten Teile wie Kunststoffe, Papier und Gummi dagegen erhalten u. U. keine basisch wirkende Schicht. Durch das Aufsprühen von Wasser auf das Abfallgemisch wird nun erreicht, daß das gesamte Abfallgemisch eine gleichbleibende Feuchte hat und damit die Haftung der pulverförmigen, basisch wirkenden Stoffe gleichmäßig über das gesamte Abfallgemisch erfolgt. Durch die Zugabe von Wasser kommt es zu einer Anfeuchtung der pulverförmigen, basisch wirkenden Stoffe. die damit haftend werden, auch wenn nur die äußeren Schichten des Pulverkorns aufgeweicht werden.

In welcher Menge Wasser zugesetzt werden muß. hängt von der Eigenfeuchte des Abfalls, insbesondere der Abfallkomponenten Papier, Pappe und Textilien, ab. Auch die Oberflächenfeuchtigkeit von Kunststoff und Gummi ist von Bedeutung. Die Menge des erforderlichen Wassers beträgt deshalb 1 bis 20 Gew.% des eingesetzten Abfalls, wenn es sich um Hausmüll handelt. Im allgemeinen sind 2 bis 10 Gew.% ausreichend.

Die Wirkung der Haftvermittlung bei einem heterogenen Abfallgemisch, das wasserabstoßende Komponenten wie Kunststoffe, und wasseranziehende Teile, z. B. Papier, enthält, kann verstärkt werden, wenn der Abfall zuerst angefeuchtet und dann ein Gemisch aus pulverförmigen, basisch wirkenden Stoffen und bei höherer Temperatur schmelzenden Kunststoffen wird. Auf diese Weise wird eine gute Haftung der basisch wirkenden Stoffe auf Papier und Kunststoffen erzielt.

Dem zuzusetzenden Wasser können noch Hilfsstoffe zur Verbesserung der Durchführung der thermischen Zersetzung der Abfallstoffe zugesetzt werden. In Frage kommen Netzmittel zur besseren Befeuchtung der Abfallstoffe, in Wasser lösliche basische Stoffe zur Unterstützung der Einbindung der sauren Schadstoffe durch die pulverförmigen, basisch wirkenden Stoffe, z. B. Natriumhydroxid oder Soda.

Eine weitere, bevorzugte Ausführungsform des erfindungsgemäßen Verfahrens ist dadurch gekennzeichnet, daß den basisch wirkenden Stoffen Hydrate anorganischer Salze zugesetzt werden, die unterhalb der Zersetzungstemperatur der Abfälle zu schmelzen beginnen. Die Hydrate werden zweckmäßig in einer Menge von 0,5 bis 25 Gew.%, vorzugsweise 1 bis 15 Gew.%, zugesetzt. Als bevorzugte Hydrate sind Hydrate von Natrium- und Calciumsalzen zu nennen, z. B. $NaAl(SO_4)_2 \cdot 12H_2O$ (Schmelzpunkt 61 °C),. $Na_2CO_3 \cdot 10H_2O$ (Schmelzpunkt 32 °C), $Na_3PO_4 \cdot 10H_2O$ (Schmelzpunkt 100 °C), $Na_3PO_4 \cdot 12H_2O$ (Schmelzpunkt 73 °C), $Na_2HPO_4 \cdot 7H_2O$ (Schmelzpunkt 48 °C) und $CaCl_2 \cdot 6H_2O$ (Schmelzpunkt 29 °C). Es handelt sich bei der Aufzählung nur um eine Auswahl.

Diese Substanzen sind bei Normaltemperatur pulverförmig. Bei einer für sie charakteristischen Temperatur beginnen sie zu schmelzen. Diese Schmelzen erweichen zumindest die Oberfläche der pulverförmigen, basisch wirkenden Stoffe. Damit ist eine bessere Haftung an den Abfallstoffen gegeben.

Das erfindungsgemäße Verfahren findet vorzugsweise bei der Entgasung oder Vergasung von Abfällen in Drehrohren oder in feststehenden Rohren mit Innentransporteinrichtung Anwendung. Es ist nicht nur für Hausmüll, sondern auch für alle Sonderabfälle, die organische Stoffe enthalten, geeignet.

Im einzelnen seien Klärschlamm, Altreifen, Altgummi, Shredderabfälle, Kunststoffe, insbesondere PVC, Lacke, Destillationsrückstände und Textilien aufgeführt. Diese Abfälle können für sich allein oder in Mischung miteinander eingesetzt werden.

Die Entgasung oder Vergasung kann hierbei sowohl kontinuierlich als auch diskontinuierlich betrieben werden.

Haupteinsatzgebiet des erfindungsgemäßen Verfahrens ist jedoch die Entgasung oder Vergasung von Hausmüll und von schwefel-, fluor- und/oder chlorhaltigen Abfällen.

Mit der Anwendung des erfindungsgemäßen Verfahrens kann die eingesetzte Menge an pulverförmigen, basisch wirkenden Stoffen bis zu 50 % verringert und die Emission an Staub um 20 bis 30 % gesenkt werden.

## Patentansprüche

1. Verfahren zur Entgasung oder Vergasung von Abfallstoffen unter Zugabe basisch wirkender Stoffe zu den Abfallstoffen, dadurch gekennzeichnet, daß den Abfallstoffen und/oder den pulverförmigen, basisch wirkenden Stoffen Substanzen zugesetzt werden, die die Haftung der pulverförmigen, basisch wirkenden Stoffe an den Abfallstoffen, insbesondere an Papier, Pappe, Kunststoffen und Gummi, erhöhen.

2. Verfahren nach Anspruch 1, dadurch gekennzeichnet, daß Haftsubstanzen zugesetzt werden, die bei höherer Temperatur wirksam werden.

3. Verfahren nach Ansprüche 1 und 2, dadurch gekennzeichnet, daß Haftsubstanzen zugesetzt werden, die ab 50 °C, vorzugsweise ab 100 °C, wirksam werden.

4. Verfahren nach den vorhergehenden Ansprüchen, dadurch gekennzeichnet, daß als Haftsubstanzen Stoffe oder Stoffgemische zugesetzt werden, die oberhalb 50 °C jedoch unterhalb der Zersetzungstemperatur der Abfallstoffe zu erweichen und/oder zu schmelzen beginnen und dann ihre Haftwirksamkeit entfalten.

5. Verfahren nach den vorhergehenden Ansprüchen, dadurch gekennzeichnet, daß als Haftsubstanzen erweichende und/oder schmelzende Kunststoffe zugesetzt werden.

6. Verfahren nach den vorhergehenden Ansprüchen, dadurch gekennzeichnet, daß Schmelzkleber zugesetzt werden.

7. Verfahren nach Anspruch 6, dadurch gekennzeichnet, daß oberhalb 50 °C erweichende und/oder schmelzende Ethylenvinylacetat-Kopolymere und/oder Polyamide zugesetzt werden.

8. Verfahren nach den vorhergehenden Ansprüchen, dadurch gekennzeichnet, daß die Haftstoffe in feinpulvriger Form mit den pulverförmigen, basisch wirkenden Stoffen vermischt werden.

9. Verfahren nach Anspruch 8, dadurch gekennzeichnet, daß die Haftstoffe als Pulver mit annähernd der gleichen Korngröße der basisch wirkenden Stoffe eingesetzt werden.

10. Verfahren nach Anspruch 9, dadurch gekennzeichnet, daß die Haftstoffe den pulverförmigen, basisch wirkenden mit einer Korngröße kleiner 10 μm zugemischt werden.

11. Verfahren nach den vorhergehenden Ansprüchen, dadurch gekennzeichnet, daß die Haftstoffe den basisch wirkenden Stoffen in Mengen von 0,5-25 Gew.%, vorzugsweise 1-15 Gew.%, zugesetzt werden.

12. Verfahren nach den vorhergehenden Ansprüchen, dadurch gekennzeichnet, daß die Haftstoffe den Abfallstoffen vor und/oder während der thermischen Behandlung als Pulver oder Granulat zugesetzt werden.

13. Verfahren nach Anspruch 1 dadurch gekennzeichnet, daß die Abfallstoffe zur Haftung der basisch wirkenden Stoffe an den Abfallstoffen vor der Zugabe der pulverförmigen, basisch wirkenden Stoffe mit Wasser befeuchtet werden.

14. Verfahren nach Anspruch 1, dadurch gekennzeichnet, daß das Gemisch aus Abfällen und den pulverförmigen, basisch wirkenden Stoffen mit Wasser befeuchtet wird, um die Haftung der basisch wirkenden Stoffe an den Abfällen zu bewirken.

15. Verfahren nach Anspruch 1, dadurch gekennzeichnet, daß die pulverförmigen, basisch wirkenden Stoffe gleichzeitig mit Wasser auf die Abfälle aufgebracht werden.

16. Verfahren nach Anspruch 13 bis 15, dadurch gekennzeichnet, daß Wasser in einer Menge von 1 bis 20 Gew.%, vorzugsweise 2 bis 10 Gew.%, bezogen auf den eingesetzten Abfall, eingesetzt wird.

17. Verfahren nach den vorhergehenden Ansprüchen, dadurch gekennzeichnet, daß bei heterogenen Abfallstoffen, die aus wasserabstoßenden Komponenten wie Kunststoffen und wasseranziehenden Bestandteilen wie Papier bestehen, die Abfallstoffe zuerst angefeuchtet werden und dann ein Gemisch aus pulverförmigen, basisch wirkenden Stoffen und bei höherer Temperatur schmelzenden oder erweichenden Kunststoffen zugegeben werden.

18. Verfahren nach Anspruch 1, dadurch gekennzeichnet, daß den basisch wirkenden Stoffen Hydrate anorganischer Salze zugesetzt werden, die unterhalb der Zersetzungstemperatur der Abfälle zu schmelzen beginnen.

19. Verfahren nach Anspruch 18, dadurch gekennzeichnet, daß die Hydrate den pulverförmigen, basisch wirkenden Stoffen in einer Menge von 0,5 bis 25 Gew.%, vorzugsweise 1 bis 15 Gew.%, zugesetzt werden.

20. Verfahren nach Anspruch 19, dadurch gekennzeichnet, daß als Hydrate $Na_2CO_3 \cdot 10H_2O$, $NaAl(SO_4)_2 \cdot 12H_2O$, $Na_3PO_4 \cdot 10H_2O$, $Na_3PO_4 \cdot 12H_2O$, $Na_2HPO_4 \cdot 7H_2O$ und/oder $CaCl_2 \cdot 6H_2O$ zugesetzt werden.

## Claims

1. Method of degasification or gasification of refuse materials with the addition of basically acting substances to the refuse material, characterised in that substances which increase the adhesion of the powdered basically acting substances on the refuse materials, particularly on paper, cardboard, plastics and rubber, are added to the refuse materials and/or the powdered basically acting substances.

2. Method as claimed in claim 1, characterised in that adhesive substances which are effective at high temperature are added.

3. Method as claimed in claims 1 and 2, characterised in that adhesive substances which are effective from 50 °C, preferably from 100 °C, are added.

4. Method as claimed in the preceding claims, characterised in that substances or mixtures of substances which begin to soften and/or to melt above 50 °C but below the decomposition temperature of the refuse materials and then display their adhesive effect are added as adhesive substances.

5. Method as claimed in the preceding claims, characterised in that plastics which soften and/or melt are added as adhesive substances.

6. Method as claimed in the preceding claims, characterised in that fusion adhesives are added.

7. Method as claimed in claim 6, characterised in that ethylene vinyl acetate copolymers and/or polyamides which soften and/or melt above 50 °C are added.

8. Method as claimed in the preceding claims, characterised in that the adhesive substances in fine powdered form are mixed together with the powdered basically acting substances.

9. Method as claimed in claim 8, characterised in that the adhesive substances are used as powder with approximately the same grain size as the basically acting substances.

10. Method as claimed in claim 9, characterised in that the adhesive substances are mixed into the powdered basically acting substances with a grain size less than 10 $\mu$m.

11. Method as claimed in the preceding claims, characterised in that the adhesive substances are added to the basically acting substances in quantities of 0.5-25 % by weight, preferably 1-15 % by weight.

12. Method as claimed in the preceding claims, characterised in that the adhesive substances are added to the refuse materials as powder or granulate before and/or during the thermal treatment.

13. Method as claimed in claim 1, characterised in that for the adhesion of the basically acting substances the refuse materials are moistened with water before the addition of the powdered basically acting substances.

14. Method as claimed in claim 1, characterised in that the mixture of refuse and the powdered basically acting substances are moistened with water in order to effect the adhesion of the basically acting substances on the refuse.

15. Method as claimed in claim 1, characterised in that the powdered basically acting substances are applied to the refuse simultaneously with water.

16. Method as claimed in claims 13 to 15, characterised in that water is used in a quantity of 1 to 20 % by weight, preferably 2 to 10 % by weight, based on the refuse used.

17. Method as claimed in the preceding claims, characterised in that with heterogeneous refuse materials which consist of water-repellent constituents like plastics and hygroscopic constituents like paper, the refuse materials are first of all moistened and then a mixture of powdered basically acting substances and plastics which melt or soften at high temperature is added.

18. Method as claimed in claim 1, characterised in that hydrates of inorganic salts which begin to melt below the decomposition temperature of the refuse are added to the basically acting substances.

19. Method as claimed in claim 18, characterised in that the hydrates are added to the powdered basically acting substances in a quantity of 0.5 to 25 % by weight, preferably 1 to 15 % by weight.

20. Method as claimed in claim 19, characterised in that $Na_2CO_3·10H_2O$, $NaAl(SO_4)_2·12H_2O$, $Na_3PO_4·10H_2O$, $Na_3PO_4·12H_2O$, $Na_2HPO_4·7H_2O$ and/or $CaCl_2·6H_2O$ are added as hydrates.

## Revendications

1. Procédé de dégazage ou de gazage de déchets par addition à ceux-ci de substances à action basique, caractérisé en ce que les déchets et/ou les substances pulvérulentes à action basique sont additionnés d'agents qui améliorent la fixation de ces substances sur les déchets, en particulier sur le papier, le carton, les matières synthétiques et le caoutchouc.

2. Procédé selon la revendication 1, caractérisé en ce que les agents de fixation additionnés sont efficaces à une température relativement élevée.

3. Procédé selon l'une des revendications 1 et 2, caractérisé en ce que les agents de fixation additionnés sont efficaces à partir de 50 °C, de préférence à partir de 100 °C.

4. Procédé selon les revendications précédentes, caractérisé en ce que les agents de fixation sont des produits ou mélanges de produits qui commencent à se ramollir et/ou à fondre et déploient alors leur activité au-dessus de 50 °C, mais au-dessous de la température de décomposition des déchets.

5. Procédé selon les revendications précédentes, caractérisé en ce que les agents de fixation additionnés sont des matières synthétiques qui se ramollissent et/ou fondent.

6. Procédé selon les revendications précédentes, caractérisé par l'addition de colles fondant à la chaleur.

7. Procédé selon la revendication 6, caractérisé par l'addition de copolymères d'éthylène et d'acétate de vinyle et/ou de polyamides qui se ramollissent et/ou fondent au-dessus de 50 °C.

8. Procédé selon les revendications précédentes, caractérisé en ce que les agents de fixation sont mélangés sous forme finement pulvérulente aux substances pulvérulentes à action basique.

9. Procédé selon la revendication 8, caractérisé en ce que les agents de fixation sont utilisés sous forme de poudre ayant sensiblement la même granulométrie que les substances à action basique.

10. Procédé selon la revendication 9, caractérisé en ce que les agents de fixation qui sont mélangés aux substances pulvérulentes à action basique ont une granulométrie inférieure à 10 μm.

11. Procédé selon les revendications précédentes, caractérisé en ce que les agents de fixation sont additionnés aux substances à action basique en quantités comprises entre 0,5 et 25 % en poids, de préférence entre 1 et 15 % en poids.

12. Procédé selon les revendications précédentes, caractérisé en ce que les agents de fixation sont ajoutés aux déchets sous forme de poudre ou de granulés avant et/ou pendant le traitement thermique.

13. Procédé selon la revendication 1, caractérisé en ce que les déchets sont humidifiés à l'eau avant addition des substances pulvérulentes à action basique afin d'améliorer la fixation de ces dernières sur ces déchets.

14. Procédé selon la revendication 1, caractérisé par l'humidification du mélange de déchets et des substances pulvérulentes à action basique afin de fixer ces dernières sur ces déchets.

15. Procédé selon la revendication 1, caractérisé en ce que les substances pulvérulentes à action basique sont déposées sur les déchets simultanément avec de l'eau.

16. Procédé selon les revendications 13 à 15, caractérisé en ce que l'eau est utilisée en une quantité comprise entre 1 et 20 % en poids, de préférence entre 2 et 10 % en poids par rapport à celle des déchets.

17. Procédé selon les revendications précédentes, caractérisé en ce que, lorsque les déchets sont hétérogènes et consistent en composants hydrophobes tels que les matières synthétiques et en composants hydrophiles tels que le papier, les déchets sont tout d'abord humidifiés et sont additionnés ensuite d'un mélange de substances pulvérulentes à action basique et de matières synthétiques fondant ou se ramollissant à une température relativement élevée.

18. Procédé selon la revendication 1, caractérisé en ce que les substances à action basique sont additionnées d'hydrates de sels minéraux qui commencent à fondre au-dessous de la température de décomposition des déchets.

19. Procédé selon la revendication 18, caractérisé en ce que les hydrates sont ajoutés aux substances pulvérulentes à action basique en une quantité comprise entre 0,5 et 25 % en poids, de préférence entre 1 et 15 % en poids.

20. Procédé selon la revendication 19, caractérisé en ce que les hydrates d'addition consistent en $Na_2CO_3·10H_2O$, $NaAl(SO_4)_2·12H_2O$, $Na_3PO_4·10H_2O$, $Na_3PO_4·12H_2O$, $Na_2PO_4·7H_2O$ et/ou $CaCl_2·6H_2O$.